# EUROPÄISCHE PATENTANMELDUNG

(11) **EP 4 407 814 A1**
(43) Veröffentlichungstag der Anmeldung: **31.07.2024**
(21) Anmeldenummer: 24150297.0
(22) Anmeldetag: 04.01.2024
(51) Int. Cl.: H01R 13/6591, B65H 69/00, G01N 21/952, H01R 43/20, H02G 1/12

(54) **KABELAUSRICHTEINRICHTUNG UND VERFAHREN ZUM ROTATIONSLAGERICHTIGEN AUSRICHTEN VON KONFEKTIONIERTEN KABELENDEN ZWEIER KABEL EINES KABELSTRANGS**

(30) Priorität: 30.01.2023 EP 23153941
(71) Anmelder: komax Holding AG, 6036 Dierikon (CH)
(72) Erfinder: Fiorentino, Pietro, 6030 Ebikon (CH)
(74) Vertreter: Inventio AG

(57) **Zusammenfassung**

Eine duale Kabelausrichteinrichtung (10) zum rotationslagerichtigen Ausrichten von konfektionierten, mit Kontaktelementen (5, 6) versehenen Kabelenden zweier Kabel (3, 4) eines verdrillten Kabelstrangs (2) umfasst zwei auf einem Einrichtungsgestell (13) angeordnete, mit Drehkabelgreifern (8, 18) ausgerüstete Kabeldrehmodule (7, 17) zum Drehen jeweils eines konfektionierten Kabelendes (3, 4) um seine Längsachse (L1, L2), und eine optische Detektionseinrichtung (11) zum Ermitteln der jeweiligen Rotationslage der Kabelenden (3, 4). Zum Einstellen des Abstands zwischen den konfektionierten Kabelenden ist eines Kabeldrehmodule (7, 17) mittels eines Antriebs (14) verschiebbar auf einem Einrichtungsgestell (13) zum Tragen der Kabeldrehmodule (7, 17) angeordnet, wodurch sichergestellt wird, dass jedes Kabel (3, 4) präzise und zuverlässig in die gewünschte Rotationslage gebracht werden kann und ein optimales Schattenbild der beiden Kontaktelemente (5, 6) der Kabelenden (14, 15) zur Lageerfassung erfasst werden kann.

## Beschreibung

Die Erfindung betrifft eine Kabelausrichteinrichtung zum rotationslagerichtigen Ausrichten von konfektionierten Kabelenden zweier Kabel eines Kabelstrangs. Weiterhin betrifft die Erfindung ein Verfahren zum rotationslagerichtigen Ausrichten von konfektionierten Kabelenden.

Kabelbäume, wie sie beispielsweise in Automobilen oder Flugzeugen eingesetzt werden, bestehen aus mehreren Kabeln, die an ihren konfektionierten Kabelenden mit Steckergehäusen versehen werden. Hierzu werden die zuvor konfektionierten, d.h. abgelängten, abisolierten und mit Kontaktelementen (z.B. Crimpkontakten) versehenen Kabelenden in Kammern oder Aufnahmen der Steckergehäuse eingeführt. In der Regel liegen die Kabel eines Kabelbaums mit den zu bestückenden Kabelenden einzeln vor und werden insoweit auch einzeln mit entsprechenden maschinellen Vorrichtungen in die Kammern der Steckergehäuse eingeführt. In zunehmendem Masse kommen bei Kabelbäumen neuerdings auch Kabelstränge aus zwei oder mehreren Kabeln zum Einsatz vornehmlich verdrillte Kabel, für die ebenfalls das Bedürfnis besteht, die freien, insbesondere entdrillten und gegebenenfalls gestreckten Kabelenden des Kabelstrangs zu bestücken. Verdrillte Kabel wie etwa sogenannten UTP-Kabel (UTP: Unshielded Twisted Pair) bieten gegenüber unverdrillten Aderpaaren einen grösseren Schutz gegen elektrische und magnetische Störungen und zeichnen sich durch besonders gute Übertragungsqualitäten von Signalen aus. Neben verdrillten Kabeln können aber auch unverdrillte Kabel von Kabelsträngen oder andere Mehrkabelsysteme zum Einsatz kommen, bei denen die Kabel lediglich nebeneinander angeordnet und in einem Verbund zusammengefasst sind.

Für das automatische Bestücken von Steckergehäusen mit Kabelsträngen aus zwei Kabeln werden entsprechende maschinellen Vorrichtungen, die dem Fachmann als Kabelbestückungsstationen bekannt sind, verwendet. Die beiden Kontaktelemente müssen sich in der richtigen Rotationslage (Winkellage um die Kabellängsachse) befinden, damit sie in Zellen eines Steckergehäuses passen und eingeführt werden können, was die automatische Bestückung von Steckergehäusen mit Kabeln anspruchsvoll macht. Um die Vorteile von UTP-Kabeln ausnutzen zu können, sollten die unverdrillten Bereiche der Kabelenden möglichst kurz ausgeführt sein. Das rotationslagerichtige Ausrichten von derartigen kurzen Kabelenden des verdrillten Kabelstrangs ist besonders anspruchsvoll.

Eine Kabelausrichteinrichtung zum rotationslagerichtigen Ausrichten von konfektionierten Kabelenden zweier Kabel eines verdrillten Kabelstrangs ist aus der EP 3 301 768 A1 bekannt geworden. Bei dieser Kabelausrichteinrichtung können die Kabelenden mittels einer Drehgreifeinrichtung, die den Kabelstrang am verdrillten Kabelbereich beaufschlägt, gedreht werden. Eine optische Detektionseinrichtung zum Ermitteln der Rotationslage der Kabel prüft die Ausrichtung der Kontaktelemente (dieser Verfahrensschritt wird nachfolgend auch kurz «Prüfung» genannt). Eine solche optische Detektionseinrichtung wurde schon in der EP 1 304 773 A1 beschrieben. Die Kabelausrichteinrichtung gemäss EP 3 301 768 A1 weist weiter am Abschnitt des entdrillten Kabelendes in Längsrichtung der Längsachse hintereinander angeordnete Kabelgreifer auf. Die Kabelgreifer sind eingerichtet, jeweils nur ein Kabel am Kabelende zu fixieren und das Kabelende des anderen Kabels zu führen. Ist ein Kabelende durch Drehen des Kabelstrang am verdrillten Kabelbereich in der richtigen Rotationslage, wird es durch den zuständigen Kabelgreifer fixiert, während das andere Kabelende durch den Kabelgreifer nur geführt wird. Sobald beide Kontaktelemente richtig orientiert sind, kann der eigentliche Bestückungsprozess beginnen. Der Orientierungsprozess dieser Kabelausrichteinrichtung erfolgt ersichtlicherweise in mehreren Arbeitsschritten.

Es ist eine Aufgabe der vorliegenden Erfindung, die Nachteile des Bekannten zu vermeiden und insbesondere eine verbesserte oder alternative Kabelausrichteinrichtung zum rotationslagerichtigen Ausrichten von konfektionierten Kabelenden zweier Kabel eines verdrillten Kabelstrangs zu schaffen, welche insbesondere effizient betrieben werden kann.

Diese Aufgabe wird erfindungsgemäss mit einer Kabelausrichteinrichtung zum rotationslagerichtigen Ausrichten von konfektionierten Kabelenden zweier Kabel eines insbesondere verdrillten Kabelstrangs mit den Merkmalen des Anspruchs 1 gelöst. Diese Kabelausrichteinrichtung wird nachfolgend der Einfachheit halber auch als duale Kabelausrichteinrichtung bezeichnet. Die duale Kabelausrichteinrichtung umfasst zwei vorzugsweise auf einem Einrichtungsgestell angeordnete Kabeldrehmodule zum Drehen jeweils eines konfektionierten Kabelendes um seine Längsachse, wobei jedes Kabeldrehmodul über einen Drehkabelgreifer und eine Dreheinrichtung zum Drehen des Drehkabelgreifers für die gewünschte Drehung des Kabelendes um seine Längsachse zum Ändern der Rotationslage verfügt. Unter Drehkabelgreifer werden Kabelgreifer verstanden, die mittels der erwähnten Dreheinrichtung die Kabel um deren Längsachse drehen können. Die Drehkabelgreifer können zwei aufeinander zu bewegbare Greiferbacken zum klemmenden Festhalten des jeweiligen Kabelendes aufweisen. Die duale Kabelausrichteinrichtung kann somit ein Einrichtungsgestell zum Tragen der Kabeldrehmodule sowie weiter eine vorzugsweise optische Detektionseinrichtung zum Ermitteln der jeweiligen Rotationslage der Kabelenden umfassen. Die duale Kabelausrichteinrichtung zeichnet sich dadurch aus, dass zum Einstellen des Abstands zwischen den konfektionierten Kabelenden wenigstens eines Kabeldrehmodule als Ganzes mittels eines Antriebs verschiebbar auf dem Einrichtungsgestell angeordnet ist. Es können weiter Steuermittel zum Ansteuern des Antriebs zum genauen Verstellen des Abstands zwischen den konfektionierten Kabelenden vorgesehen sein. Durch das Verstellen bei Bedarf des Abstands zwischen den konfektionierten Kabelenden resultiert ein vorteilhafter Versatz, dank welchem die Rotationslage der Kabelenden vorzugsweise mittels der erwähnten optischen Detektionseinrichtung einfach ermittelbar ist. Die erwähnte Rotationslage kann durch einen Winkel um die Kabellängsachse (kurz: Kabelachse) bestimmt sein. Der Winkel gibt an, um wieviel das Kabel von der Ist-Lage um seine Längsachse bzw. Kabelachse gedreht werden müsste, um seine Soll-Lage zu erreichen. Der erwähnte Versatz bezieht sich dabei auf die Lage der Kabelachsen. Durch das Versetzen kann die relative Lage der Kabelachsen verändert werden. Durch die Drehkabelgreifer kann sichergestellt werden, dass jedes Kabel präzise und zuverlässig in die gewünschte Rotationslage gebracht werden kann. Mit der dualen Kabelausrichteinrichtung können konfektionierte Kabelenden effizient und schnell ausgerichtet werden. Dies schafft auch die Grundlage dafür, dass die Kabelenden mit den Kontaktelementen einfach in Zellen eines Steckergehäuses eingeführt werden können. Die Drehkabelgreifer ermöglichen beide Kabel bzw. Kabelenden gleichzeitig auszurichten, wodurch sich die Prozesszeit für das rotationslagerichtige Ausrichten erheblich verkürzen kann.

Die duale Kabelausrichteinrichtung kann eine optische Detektionseinrichtung zum Ermitteln der jeweiligen Rotationslage der konfektionierten Kabelenden umfassen. Die Ermittlung der Rotationslagen der Kabelenden erfolgt bevorzugt wenigstens vor Beginn des Ausrichtvorgangs. Anhand der Kenntnis des Ist-Zustands kann berechnet werden, inwieweit das Kabel gedreht werden muss. Bevorzugt wird nach dem ersten Verstellen der Drehkabelgreifer geprüft, ob die Rotationslage tatsächlich die Soll-Lage eingenommen worden ist. Andernfalls muss der Vorgang zum Nachstellen nochmals wiederholt werden. Zum Beispiel kann die optische Detektionseinrichtung eine Kamera umfassen. Die optischen Detektionseinrichtung kann alternativ eine Abtasteinheit oder ein Bilderfassungsmodul mit wenigstens einem Zeilensensor sein oder umfassen. Die konfektionierten Kabelenden werden dabei bevorzugt vor Beginn des Ausrichtvorgangs in das Bilderfassungsmodul eingebracht. Das Bilderfassungsmodul kann zwei in unterschiedlichen Richtungen angeordneten Zeilensensoren umfassen, wobei die konfektionierten Kabelenden vor oder zu Beginn des Ausrichtvorgangs in das Bilderfassungsmodul eingebracht werden können.

Wenigstens eines der Kabeldrehmodule kann zum Einstellen des vertikalen Abstands zwischen den Kabelenden in vertikaler Richtung verschiebbar sein. Die duale Kabelausrichteinrichtung kann dabei derart ausgestaltet sein, dass im betriebsbereiten Zustand der Kabelstrang und die auszurichtenden konfektionierten Kabelenden in horizontaler Richtung verlaufen. Selbstverständlich sind alternativ zur vertikalen Richtung auch andere Verschieberichtungen vorstellbar. Zum Beispiel könnte das verschiebbare Kabeldrehmodul schräg in der Kabelausrichteinrichtung verbaut sein und eine Bewegung in diagonaler Richtung zum Erstellen des Versatzes ermöglichen. Als diagonale Richtung wird dabei eine schräge, also nichtvertikale Verschieberichtung verstanden, wobei die Verschieberichtung bevorzugt um 45° zur Horizontalen geneigt sein kann.

Die Kabelausrichteinrichtung kann zwei verschiebbar auf dem Einrichtungsgestell angeordnete Kabeldrehmodule aufweisen. Es kann jedoch aus Kostengründen vorteilhaft sein, wenn nur eines Kabeldrehmodule verschiebbar auf dem Einrichtungsgestell angeordnet ist und dass das andere Kabeldrehmodul ortsfest auf dem Einrichtungsgestell angeordnet ist.

Weiterhin kann es vorteilhaft sein, wenn dass die Kabeldrehmodule in Bezug auf eine Längsrichtung, die in der Regel mit der Kabelachse übereinstimmt, hintereinander angeordnet sind. Diese Anordnung Hintereinander kann insbesondere die Kabelgreifer der Kabeldrehmodule betreffen. Die Antriebe zum Drehen der Kabelgreifer müssen nicht hintereinander, sondern können beispielsweise nebeneinander angeordnet sein.

Die Kabelausrichteinrichtung kann zum Verschieben des Kabeldrehmoduls einen Linearantrieb aufweisen. Als Aktuator zum Verschieben des Kabeldrehmoduls kommt beispielsweise pneumatisch arbeitender Linearantrieb oder andere Linearantriebe in Frage. Der Linearantrieb kann ein elektromechanischer Linearantrieb oder auch eine Gewindespindel enthalten.

Bevorzugt kann im Einrichtungsgestell ein Pneumatikzylinder als Antrieb zum Verschieben des Kabeldrehmoduls integriert sein. Pneumatische Antriebe sind kostengünstig und steuertechnisch einfach handhabbar.

Die Dreheinrichtungen zum Drehen der Drehkabelgreifer zum Ändern der Rotationslage der Kabelenden können Antriebe umfassen, die getriebemässig über Ritzel und Zahnkranzsegmente mit den Drehkabelgreifern verbunden sind. Mit einer solchen Anordnung lässt sich die gewünschte Rotationslage des jeweiligen Kabelendes einfach und präzise erreichen. Das Zahnkranzsegment kann mit einer Innenverzahnung oder Aussenverzahnung versehen sein, welches durch ein mit dieser in Eingriff stehendem, mittels eines Motors antreibbares Ritzel in Wirkverbindung steht.

Der jeweilige Drehkabelgreifer kann an einem Zahnkranzsegment angebracht sein, welches einen beschränkten Drehbereich von maximal 90° und vorzugsweise zwischen 30° und 45° definiert. Damit können weiter Kosten eingespart werden und die Dreheinrichtungen in einer kompakten Bauform erhalten werden. Der Drehkabelgreifer kann starr mit dem Zahnkranzsegment verbunden sein. Selbstverständlich sind auch andere Anbringungsarten denkbar.

Ein weiterer Aspekt der Erfindung kann eine Anordnung zum Handhaben von Kabeln mit einer Kabelausrichteinrichtung zum rotationslagerichtigen Ausrichten von konfektionierten Kabelenden zweier Kabel eines insbesondere verdrillten Kabelstrangs, insbesondere die vorgängig beschriebene duale Kabelausrichteinrichtung und mit einer Bestückungsgreifeinheit mit zwei individuell ansteuerbaren Bestückungskabelgreifern zum Erfassen der rotationslagerichtig ausgerichteten konfektionierten Kabelenden der Kabel und zum Zuführen der konfektionierten Kabelenden zu Steckergehäusen betreffen. Die Bestückung kann beispielhaft in ein Steckergehäuse mit zwei Zellen erfolgen. Es sind aber auch zwei Steckergehäuse denkbar, in die jeweiligen Kabelenden jeweils eingesteckt werden.

Weiter betrifft die Erfindung ein Verfahren zum rotationslagerichtigen Ausrichten von konfektionierten Kabelenden zweier Kabel eines insbesondere verdrillten Kabelstrangs, vorzugsweise unter Verwendung der vorgängig beschriebenen Kabelausrichteinrichtung und gegebenenfalls zum Bestücken von Steckergehäusen mit konfektionierten Kabelenden von zwei Kabeln des insbesondere verdrillten Kabelstrangs. Das Verfahren zeichnet sich dadurch aus, dass die Rotationslage der konfektionierten sich entlang Kabelachsen erstreckenden, vorzugsweise horizontalen Kabelenden der Kabel mittels der Kabelausrichteinrichtung verändert und so das jeweilige konfektionierte Kabelende ausgerichtet wird, wobei die vorzugsweise horizontalen Kabelenden zum Erstellen eines Versatzes zu Beginn des Ausrichtvorgangs in Bezug auf ihre Kabelachsen auf unterschiedliche Höhen mittels der Kabelausrichteinrichtung gebracht werden. Somit ergibt sich ein vorteilhafter Höhenversatz der Kabelenden, dank welchem die Rotationslage der Kabelenden vorzugsweise mittels optischen Detektionseinrichtung einfach ermittelbar ist. Wenn die Kabel gemäss eine bevorzugten Ausführungsform einen horizontalen Verlauf haben, dann entspräche die Höhe der jeweiligen Kabelenden dem vertikalen Abstand zu einer horizontalen Referenzfläche, beispielsweise eine durch einen Maschinentisch oder den Boden vorgegebene Referenzfläche. Um die Kabelenden auf unterschiedliche Höhen zu bringen, kann wenigstens eines der Kabel achsparallel bewegt werden. Unter dem genannten Versatz oder präziser Höhenversatz kann der so geschaffene vertikale Abstand zwischen den Kabelenden verstanden werden. Es kann allerdings auch Fälle geben, in welchen kein Erstellen des Versatzes mittels der Kabelausrichteinrichtung stattfindet. Handelt es sich zum Beispiel um auszurichtende Kabel mit Kontaktelementen mit flachem Querschnitt, die horizontal ausgerichtet werden sollen, wird die Prüfung von Beginn an mit dem Versatz ausgeführt.

Die Kabelenden können zum Erstellen eines initialen Versatzes mittels der Bestückungsgreifeinheit vor Beginn des Ausrichtvorgangs auf unterschiedliche Höhen gebracht werden. Somit ist es vorstellbar, dass alternativ oder gegebenenfalls zusätzlich zum Erstellen eines Versatzes mittels der Kabelausrichteinrichtung die Kabelenden zum Erstellen eines initialen Versatzes mittels der Bestückungsgreifeinheit auf unterschiedliche Höhen gebracht werden, welcher Vorgang vor dem Beginn des Ausrichtvorgangs stattfindet. Der initiale Versatz wird erstellt, bevor die Kabel erstmalig von den Kabelgreifern oder anderen Angriffsmitteln der Kabelausrichteinrichtung erfasst oder sonstwie beaufschlagt werden. Dies kann insbesondere für den Fall notwendig sein, wenn es sich um Kontaktelemente mit flachem Querschnitt handelt, die horizontal ausgerichtet werden sollen.

Zum Erstellen eines Versatzes zu Beginn des Ausrichtvorgangs können die Kabelenden um einen vorbestimmten oder um einen variablen Verschiebeweg relativ zueinander bewegt werden. Ein Versatz kann notwendig sein, wenn erkannt worden ist, dass die Kabelenden oder beispielsweise präziser die Kontaktelemente an den Kabelenden in ungünstigen Lagen sich befinden, so dass mittels einer Detektionseinrichtung die Rotationslage der Kabelenden schwierig zu erfassen ist. Der Versatz muss nur bei Bedarf erstellt werden. Ein vorbestimmter fester Verschiebeweg, der zum Beispiel einige Millimeter betragen kann, ist besonders einfach ausführbar. Wenn die Kontaktelemente günstig liegen und orientiert sind, kann der vorgenannte Bedarfsfall nicht gegeben sein und ein Erstellen des Versatzes wird nicht durchgeführt.

Wenn ein initialen Versatz vor Beginn des Ausrichtvorgangs notwendig ist, erfolgt die entsprechende Relativbewegung der Kabelenden bevorzugt um einen vorbestimmten festen Verschiebeweg.

Vorteilhaft kann es sein, wenn zum Erstellen des Versatzes der oder die Drehkabelgreifer der Kabelausrichteinrichtung in vertikaler Richtung verschoben wird oder werden. Alternativ sind auch andere Bewegungsrichtungen zum Verschieben der Drehkabelgreifer denkbar. Zum Beispiel kann wenigstens einer der Drehkabelgreifer zum Erstellen des Versatzes in diagonaler Richtung verschoben werden. Als diagonale Richtung wird dabei eine schräge, also nichtvertikale Verschieberichtung verstanden, wobei die Verschieberichtung bevorzugt um 45° zur Horizontalen geneigt ist.

Zum Erstellen des Versatzes zu Beginn des Ausrichtvorgangs kann nur eines der Kabelenden bewegt werden, währen das andere Kabelende ortsfest bleibt. Für bestimmte Anwendungsfälle kann es jedoch vorteilhaft sein, wenn beide Kabelenden zum Erstellen des Versatzes bewegt werden.

Besonders vorteilhaft kann es sein, wenn die Kabelenden soweit in diagonaler Richtung voneinander weg oder aufeinander zu bewegt werden, bis die der Kabelenden in vertikaler Richtung übereinanderstehen.

Die Rotationslage der konfektionierten Kabelenden kann mittels einer optischen Detektionseinrichtung überwacht werden, die ein Schattenbild der Kontaktelemente zur Lageerfassung verwendet. Das Schattenbild wird dabei bevorzugt aus der Schattenbreite bzw. Schattenkontur der Kontaktelemente und dem Drehwinkel einer Abtasteinheit der optischen Detektionseinrichtung erzeugt.

Ein besonders vorteilhaftes Verfahren ergibt sich, wenn die Rotationslage der konfektionierten Kabelenden mittels der optischen Detektionseinrichtung überwacht wird, die ein Schattenbild der beiden Kontaktelemente der Kabelenden zur Lageerfassung verwendet, wobei beim Ermitteln der Rotationslage der konfektionierten Kabelenden der Bereich des Schattenbilds, bei dem eine Überschneidung der Schattenkonturen der beiden Kontaktelemente auftritt, das Schattenbild durch das vorgängig erwähnte Versetzen verzerrt und so die Bilderfassung optimiert wird. Dank des durch diese Verzerrung erhaltenen besseren Schattenbildes kann nun die Rotationslage der konfektionierten Kabelenden einfach und präzise ermittelt werden.

Vor oder zu Beginn des Ausrichtvorgangs kann die Rotationslage der konfektionierten Kabelenden mittels der optischen Detektionseinrichtung ermittelt werden, wobei die optischen Detektionseinrichtung ein Schattenbild der beiden Kontaktelemente der Kabelenden zur Lageerfassung (Ist-Zustand) verwendet und dass anhand der Kenntnis des Ist-Zustands berechnet werden kann, inwieweit das Kabelende gedreht werden muss.

Die Ermittlung der Rotationslage der konfektionierten Kabelenden mittels der optischen Detektionseinrichtung kann insbesondere auch durchgeführt werden, nachdem der initiale Versatz mittels der Bestückungsgreifeinheit erstellt worden ist und/oder nachdem der Versatz mittels der Kabelausrichteinrichtung erstellt worden ist.

Zum Ermitteln der Rotationslage der konfektionierten Kabelenden kann eine optische Detektionseinrichtung mit zwei Lichtvorhängen und zugehörigem Zeilensensoren verwendet werden, wobei die beiden Lichtvorhänge und entsprechend die Zeilensensoren rechtwinklig zueinander orientiert sind, wobei einer der Lichtvorhängen ein vorzugsweise vertikal orientierter Lichtvorhang und der andere Lichtvorhang ein vorzugsweise horizontal orientierter Lichtvorhang sind.

Zum Drehen der konfektionierten Kabelenden zum Ändern der Rotationslage können Drehkabelgreifer verwendet werden, die jeweils an Zahnkranzsegmenten angebracht sind, welcher beschränkte Drehbereiche definieren. Wenn die aktuelle Rotationslage eines der oder beider konfektionierten Kabelenden einen gewissen Winkelbereich übersteigt, kann es vorteilhaft sein, wenn der oder die jeweiligen Drehkabelgreifer vor Beginn des Ausrichtvorgangs in eine Ausgangslage gebracht werden, die von der durch das Zahnkranzsegment vorgegebenen Neutralstellung entfernt ist.

Die fertig ausgerichteten konfektionierten Kabelenden können einer Rotationslage-Endprüfung unterzogen werden, während die Kabelenden noch von Drehkabelgreifern (der Kabelausrichteinrichtung gehalten werden oder nachdem sie von der Bestückungsgreifeinheit ergriffen worden sind.

Weiter kann es vorteilhaft sein, wenn die konfektionierten Kabelenden vorausgerichtet werden und erst danach die Rotationslage der konfektionierten Kabelenden mittels der optischen Detektionseinrichtung erstmalig ermittelt werden. Die Prozesszeit zur Durchführung des Ausrichtvorgangs kann so nochmals verkürzt werden. Die Vorausrichtung kann beispielsweise ein Bediener manuell vornehmen.

Weitere Einzelmerkmale und Vorteile der Erfindung ergeben sich aus der nachfolgenden Beschreibung von Ausführungsbeispielen und aus den Zeichnungen. Es zeigen:
- Figur 1: eine perspektivische Darstellung einer erfindungsgemässen dualen Kabelausrichteinrichtung zum rotationslagerichtigen Ausrichten von konfektionierten Kabelenden zweier Kabel eines verdrillten Kabelstrangs,
- Figur 2: eine perspektivische Darstellung einer Anordnung mit der dualen Kabelausrichteinrichtung gemäss Figur 1, einer optischen Detektionseinrichtung sowie einer Bestückungsgreifeinheit,

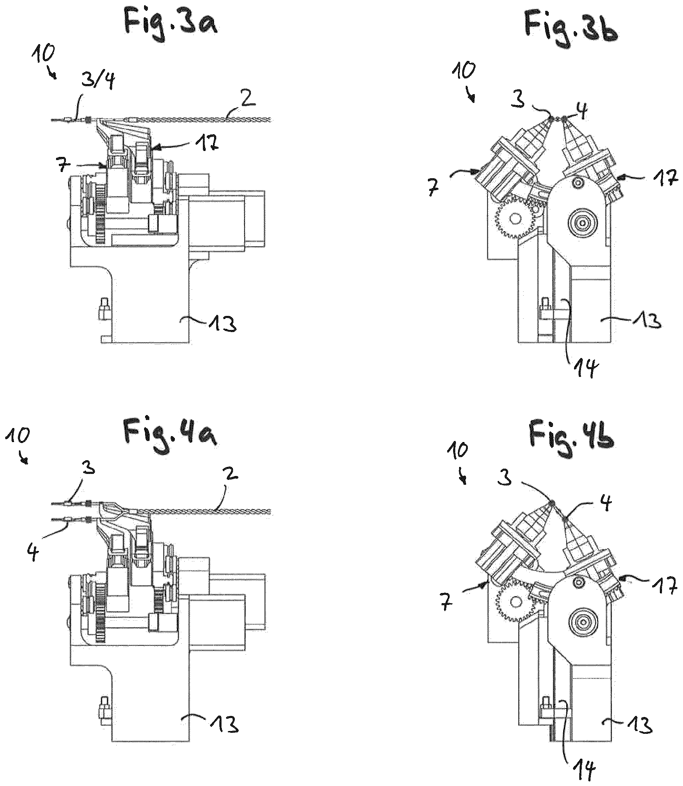

- Figur 3a: eine Seitenansicht der dualen Kabelausrichteinrichtung aus Figur 1,
- Figur 3b: die duale Kabelausrichteinrichtung in einer Frontansicht,
- Figur 4a, 4b: eine Seitenansicht und eine Frontansicht der dualen Kabelausrichteinrichtung, nachdem ein Kabeldrehmodul in vertikaler Richtung verschoben wurde,

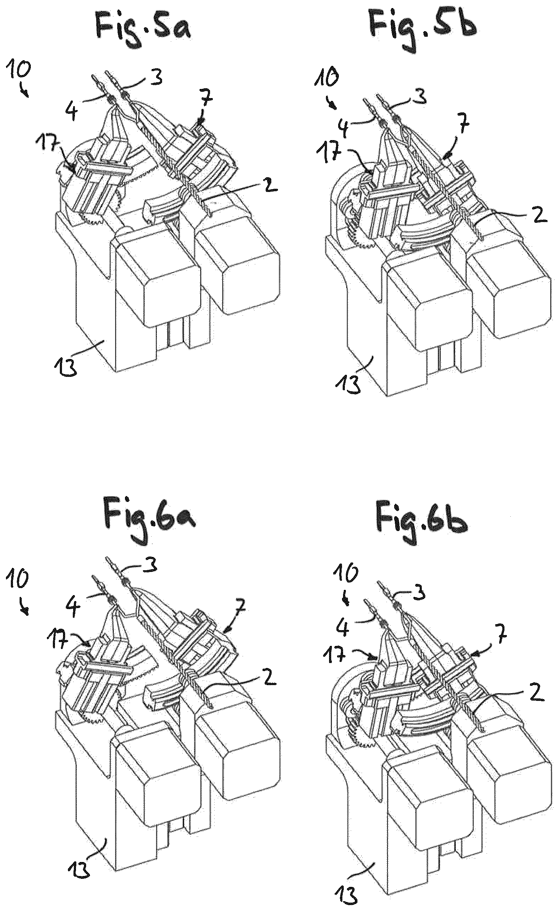

- Figur 5a: eine perspektivische Darstellung der Kabelausrichteinrichtung,
- Figur 5b: die Kabelausrichteinrichtung nach einem Ausrichtvorgang bzw. mit gedrehten Kabeldrehmodulen,
- Figur 6a: die Kabelausrichteinrichtung gemäss Fig. 5a, jedoch mit vertikal verschobenem Kabeldrehmodul, eine vereinfachte Darstellung der Prüfsituation mit Schattenbild, wenn ein Kontaktelement gedreht wird, und
- Figur 6b: die Kabelausrichteinrichtung mit gedrehten Kabeldrehmodulen gemäss Fig. 5b, jedoch mit einem vertikal verschobenem Kabeldrehmodul,
- Figur 7: eine vereinfachte Darstellung einer Prüfsituation zum Ermitteln der Rotationslage von konfektionierten Kabelenden mit Schattenbild, wobei die Kabelenden Kontaktelemente aufweisen, die mit ihrer schmaleren Seite in vertikaler Richtung ausgerichtet werden sollen,
- Figur 8a: eine vereinfachte Darstellung einer Prüfsituation zum Ermitteln der Rotationslage von konfektionierten Kabelenden mit Schattenbild, wobei die Kabelenden Kontaktelemente aufweisen, die mit ihrer schmaleren Seite in horizontaler Richtung ausgerichtet werden sollen,
- Figur 8b: die Prüfsituation mit Schattenbild gemäss Fig. 8, wobei jedoch eines der Kontaktelemente nach oben verschoben wurde,
- Figuren 9a, 9b: ein Diagramm zu Schattenkurve von Kontaktteilen, die mit ihrer schmaleren Seite in horizontaler Richtung ausgerichtet werden sollen (Fig. 9a), wobei ein Kabelende nach oben und das andere nach unten verschoben wird (Fig. 9b), und
- Figuren 10a, 10b: ein Diagramm zu Schattenkurve von Kontaktteilen, die mit ihrer schmaleren Seite in horizontaler Richtung ausgerichtet werden sollen (Fig. 10a), wobei die Kabelenden diagonal verschoben, bis die Kabelachsen vertikal übereinanderstehen (Fig. 10b).

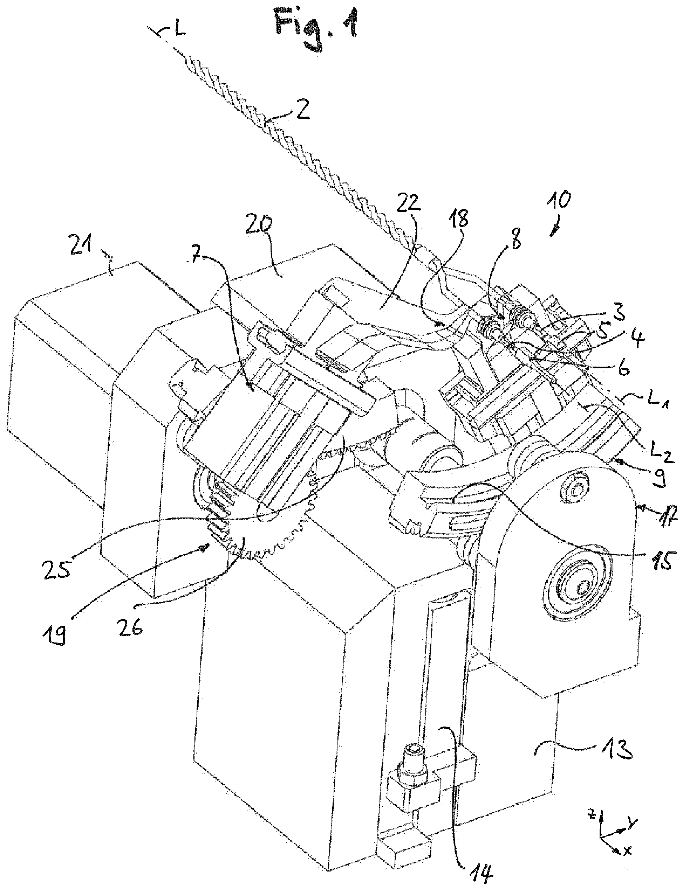

Figur 1 zeigt eine Kabelausrichteinrichtung 10 zum rotationslagerichtigen Ausrichten von Kabelenden 3, 4 zweier Kabel eines sich entlang einer Längsachse L erstreckenden verdrillten Kabelstrangs 2. Daher wird nachfolgend der Einfachheit halber für den zwei Kabel handhabende Kabelausrichteinrichtung 10 auch der Begriff «duale Kabelausrichteinrichtung» verwendet. Das jeweilige Kabel ist in der Regel ein elektrisches Kabel enthaltend zum Beispiel einen Vollleiter aus Kupfer oder Aluminium oder Drahtlitzen und einer Isolation als Ummantelung für die Leiter.

Das in Figur 1 gezeigte kartesische Koordinatensystem dient als Hilfestellung für das Verständnis der Richtungen und der Hauptbewegungen der Komponenten der dualen Kabelausrichteinrichtung 10. Die duale Kabelausrichteinrichtung 10 umfasst zwei auf einem Einrichtungsgestell 13 angeordnete Kabeldrehmodule 7, 17. Jedes der Kabeldrehmodule 7, 17 ist dabei je einem der Kabel des Kabelstrangs 2 zugeordnet. Die Kabeldrehmodule 7, 17 dienen dabei zum Drehen jeweils eines konfektionierten Kabelendes 3, 4 um seine Längsachse L1, L2. Jedes Kabeldrehmodul 7, 17 verfügt über einen Drehkabelgreifer 8, 18 und eine Dreheinrichtung 9, 19 zum Drehen des Drehkabelgreifers 8, 18 für die gewünschte Drehung des Kabelendes um seine Längsachse zum Ändern der Rotationslage. Die genannten Längsachsen L1, L2 werden nachfolgend der Einfachheit halber auch als «Kabelachsen» bezeichnet.

Zum Einstellen des Abstands zwischen den konfektionierten Kabelenden, hier beispielhaft eine horizontalen Verlauf haben, ist das mit 7 bezeichnete Kabeldrehmodul mittels eines Antriebs 14 verschiebbar auf dem Einrichtungsgestell 13 angeordnet. Weiter können (hier nicht dargestellte) Steuermittel zum Ansteuern des Antriebs zum genauen Verstellen des Abstands zwischen den konfektionierten Kabelenden vorgesehen sein. Durch das Verstellen des Abstands resultiert ein nachfolgend im Detail erläuterter vorteilhafter Versatz, wodurch die Möglichkeit geschaffen wird, die Position der Kontaktelemente der konfektionierten Kabelenden zueinander zu ändern, was schwierige Prüfsituationen vereinfachen kann.

Die Drehkabelgreifer 8, 18 weisen jeweils zwei aufeinander zu bewegbare Greiferbacken 22 zum klemmenden Festhalten des jeweiligen Kabelendes 3, 4 auf. Die Greiferbacken sind auf Linearführungen 23 gelagert und können mittels Zustellantrieben auf und zu gemacht werden.

Im vorliegenden Ausführungsbeispiel ist das Kabeldrehmodul 7 zum Einstellen des vertikalen Abstands zwischen den horizontalen Kabelenden in vertikaler Richtung z verschiebbar. Das andere Kabeldrehmodul 17 ist ortsfest auf dem Einrichtungsgestell 13 angeordnet. Im Einrichtungsgestell 13 ist ein Pneumatikzylinder 14 als Antrieb zum Verschieben des Kabeldrehmoduls 7 integriert.

Die Dreheinrichtungen 9, 19 zum Drehen der Drehkabelgreifer 8, 18 zum Ändern der Rotationslage der Kabelenden umfassen Antriebe 20, 21, die getriebemässig über Ritzel 16, 26 und Zahnkranzsegmente 15, 25 mit den Drehkabelgreifern 8, 18 verbunden sind. Der jeweilige Drehkabelgreifer 8, 18 ist an einem Zahnkranzsegment 15, 25 mit einer Aussenverzahnung angebracht, welcher einen beschränkten Drehbereich definiert. In der hier beispielhaft gezeigten ersten Ausführungsform besitzt die Kabelausrichteinrichtung 10 eine zwei unabhängige Drehkabelgreifer 8, 18, die sich um ±17.5° jeweils um die jeweilige Kabelachse drehen lassen. Die zwei Kabelachsen L1, L2 verlaufen parallel in einem Abstand von 10 mm und sind um 6 mm in negativer z-Richtung versetzt zur Drehachse des Prüfkopfes 40 positioniert.

Die hier gezeigte Kabelausrichteinrichtung 10 dient insbesondere im Hinblick auf eine nachfolgende Bestückung von Steckergehäusen mit konfektionierten Kabelenden. An den jeweiligen abisolierten Kabelenden verdrillten Kabelstrangs 2 sind vorliegend beispielhaft Crimpkontakte als Kontaktelemente 5, 6 angebracht.

Wie aus Figur 1 entnehmbar ist, sind die konfektionierten Kabelenden 3, 4 der Kabel nicht gleichgerichtet und gegenüber der Vertikalen und Horizontalen schief orientiert. Mit der nachfolgend im Detail beschriebenen dualen Kabelausrichteinrichtung 10 können die Kabelenden 3, 4 rotationslagerichtig ausgerichtet werden.

Beim verdrillten Kabelstrang 2 kann es sich um ein sogenanntes UTP-Kabel handeln. An den freien Kabelenden 3, 4 sind Kontaktelemente 5, 6 mit im Querschnitt rechteckigen oder rautenförmigen Aussenkonturen angebracht. Die Kontaktelemente 5, 6 könnten jedoch auch andere im Querschnitt nicht-runde Formen aufweisen. Runde Kontaktelemente erfordern üblicherweise kein Ausrichten ihrer Rotationslage. Weiter können an den Kabelenden 3, 4 Tüllen angebracht sein. Selbstverständlich kann je nach Bedarf auch auf Tüllen verzichtet werden. An den verdrillten Bereich schliesst vorderseitig der kurze unverdrillte Bereich mit den konfektionierten Kabelenden 3, 4 an. Mit der dualen Kabelausrichteinrichtung 10 lassen sich aber auch unverdrillte aus zwei Kabeln zusammengesetzte Kabelstränge bearbeiten oder auch beide Enden eines einzelnen Kabels.

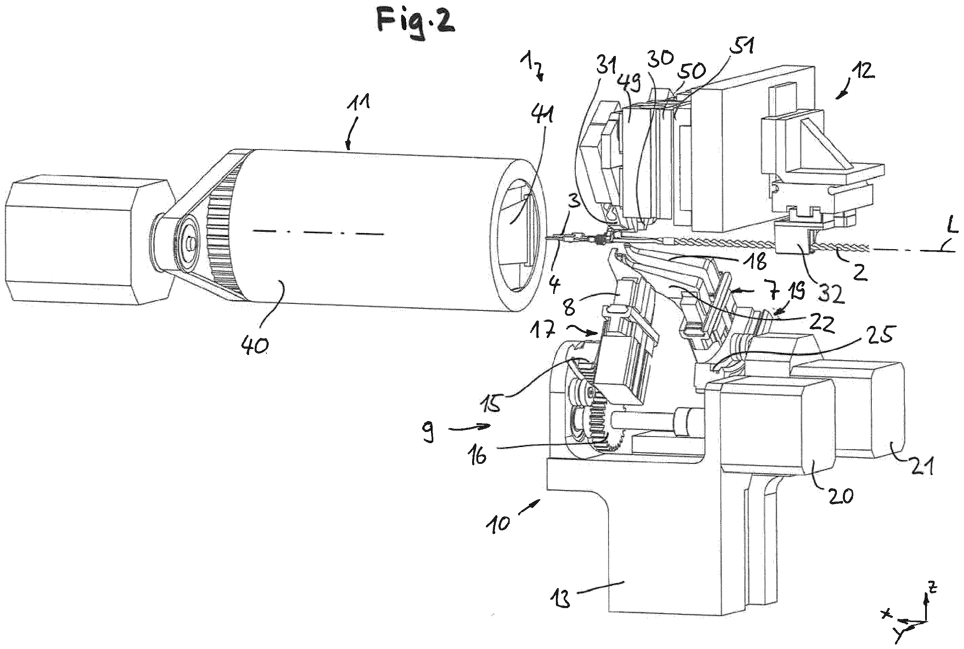

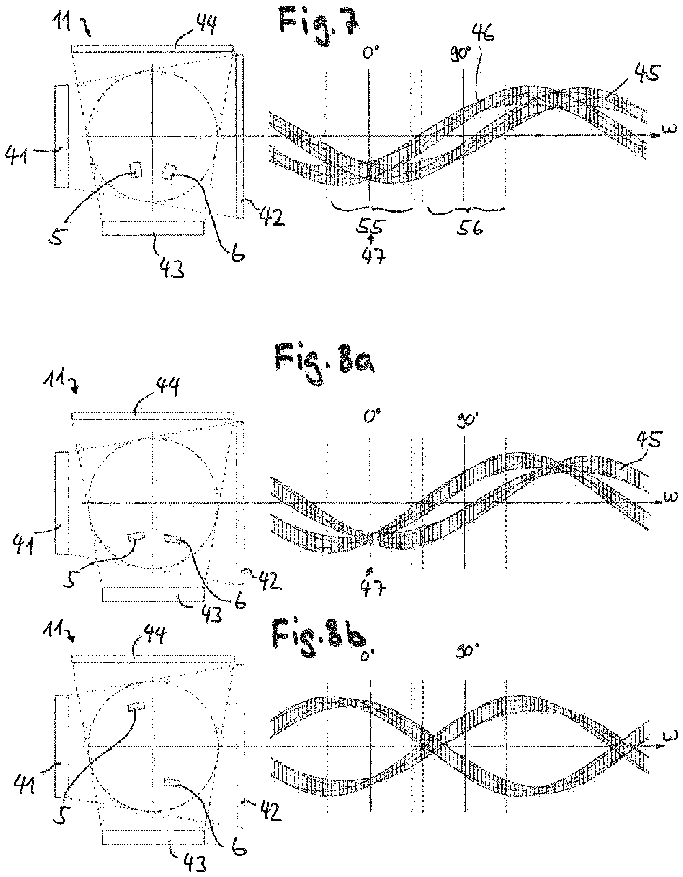

Zum Überprüfen, ob die konfektionierten Kabelenden 3, 4 der Kabel und präziser ausgedrückt die Kontaktelemente 5, 6 der Kabelenden 3, 4 sich nach dem Ausrichtvorgang in der richtigen Rotationslage befinden, kann die in Figur 2 gezeigte optischen Detektionseinrichtung 11 verwendet werden. Mit dieser optischen Detektionseinrichtung 11 können jedoch auch die Ist-Zustände der Kabelenden, d.h. die im Wesentlichen durch die Winkel gekennzeichneten Fehlstellungen vor oder zu Beginn des Ausrichtvorgangs ermittelt werden. Die optischen Detektionseinrichtung 11 umfasst ein Bilderfassungsmodul mit einer Abtasteinheit mit Zeilensensoren. Die optische Detektionseinrichtung 11 weist weiter einen hier beispielhaft zylinderförmigen Prüfkopf 40 auf, der die Zeilensensoren enthält und der in an sich bekannte Weise um seine Achse gedreht werden kann. Hierzu kann beispielsweise ein Bilderfassungsmodul verwendet werden, wie es schon aus der EP 1 304 773 A1 bekannt geworden ist. Hinsichtlich Details zum Aufbau und der grundsätzlichen Wirkungsweise wird auf diese Schrift verwiesen. Die vorliegende optische Detektionseinrichtung 11 unterscheidet sich von der bekannten Detektionseinrichtung vor allem dadurch, dass sie sich zum Erfassen von konfektionierten Kabelenden zweier Kabel besonders gut eignet. Auf diesen Aspekt wird nachfolgend insbesondere anhand der Figuren 7 bis 10b noch im Detail eingegangen.

Nach dem Einstellen der Winkellage durch Drehen der Drehkabelgreifer 8, 18 wird bei jedem Kabel unter Verwendung der optischen Detektionseinrichtung 11 die Rotationslage des konfektionierten Kabelendes 3, 4 geprüft, ob tatsächlich die Soll-Lage eingenommen worden ist. Andernfalls muss der Vorgang zum Nachstellen nochmals wiederholt werden.

Nach Beendigung des Ausrichtvorgangs, bei dem mittels der vorgängig beschriebenen duale Kabelausrichteinrichtung 10 die konfektionierten Kabelenden 3, 4 der zwei Kabel rotationslagerichtig ausgerichtet wurden und mittels der optischen Detektionseinrichtung 11 festgestellten oder überprüften rotationslagerichtigen Ausrichtung der konfektionierten Kabelenden kann als nächster Arbeitsschritt die eigentliche Bestückung vorgenommen werden. Zum Bestücken werden die konfektionierten Kabelenden 3, 4 der Kabel von einer Bestückungsgreifeinheit 12 erfasst und zu (nicht dargestellten) Steckergehäusen geführt, welche in Figur 2 gezeigt ist. Dabei werden die Kontaktelemente 5, 6 beispielsweise in Zellen eines Steckergehäuses eingesteckt.

Die duale Kabelausrichteinrichtung 10 ist vorliegend damit Bestandteil einer mit 1 bezeichneten Anordnung zum Handhaben von Kabeln, die nachfolgend der Einfachheit halber als «Bestückungsanordnung» bezeichnet wird. Die Bestückungsanordnung 1 umfasst die duale Kabelausrichteinrichtung 10, die optischen Detektionseinrichtung 11 und die Bestückungsgreifeinheit 12.

Die Bestückungsgreifeinheit 12 weist zwei Bestückungskabelgreifer 30, 31 zum Erfassen der konfektionierten Kabelenden 3,4 der Kabel und zum Zuführen der der rotationslagerichtig ausgerichteten konfektionierten Kabelenden zu Steckergehäusen. Jeder der Kabelgreifer 30, 31 ist individuell ansteuerbar und lässt sich jeweils in x-, y- und z-Richtung bewegen. Dadurch, dass die Kabelgreifer 30, 31 mittels entsprechender Aktuatoren unabhängig voneinander bewegt werden können, ist sichergestellt, dass die Kabel, die nach dem Ausrichtvorgang in der Regel auf unterschiedlichen Höhen liegen, erfasst werden können. Zur Zugentlastung des Kabelstrangs 2 während dem Bestücken ist weiter ein dritter dem Kabelstrang zugeordneter Greifer 32 vorgesehen. In Figur 2 sind die Bewegungsrichtungen von Aktuatoren durch Doppelpfeile angedeutet, mit welchen die Bestückungskabelgreifer 30, 31 bewegt werden können. Mittels mit 50 bezeichneten Aktuatoren können die Bestückungskabelgreifer 30, 31 in z-Richtung auf und ab bewegt werden, um die auf unterschiedlichen Höhen liegenden Kabel erfassen zu können. Zum Bewegen der Bestückungskabelgreifer 30, 31 in x-Richtung dienen Aktuatoren 49; zum Bewegen der Bestückungskabelgreifer 30, 31 in y-Richtung dienen Aktuatoren 51.

Die Bestückungskabelgreifer 30, 31 erfassen die Kabel im Bereich der Kabelenden 3, 4 jeweils vor den die Kabel beaufschlagenden Drehkabelgreifer 8, 18. Insbesondere der mit 18 bezeichnete Drehkabelgreifer verfügt über eine stark gekröpfte Form.

Die Rotationslage der konfektionierten Kabelenden wird mittels einer optischen Detektionseinrichtung 11 überwacht, die ein Schattenbild der beiden Kontaktelemente 5, 6 der Kabelenden 3, 4 zur Lageerfassung verwendet. In Figur 7 ist eine Prüfsituation mit Schattenbild beispielhaft gezeigt.

Die optische Detektionseinrichtung 11 enthält wenigstens einen Lichtvorhang 41 mit gegenüberliegenden Sensor. Nachdem die optische Detektionseinrichtung 11 in eine Prüfposition gefahren worden ist, dreht die optische Detektionseinrichtung 11 den Prüfkopf 40 um die Kontaktelemente 5, 6 und prüft die Rotationslage der Kontaktelemente. Der Prüfkopf 40 besitzt den Lichtvorhang 41 und dem zugehörigen Zeilensensor, um Schattenbilder der Kontaktelemente 5,6 zu erzeugen. Während dem sich der Prüfkopf 40 um die Kontaktelemente 5, 6 dreht, werden die erfassten Schattenbilder aufgezeichnet.

Im vorliegenden Ausführungsbeispiel weist die optische Detektionseinrichtung 11 jedoch zwei Lichtvorhänge mit zugehörigem Zeilensensoren auf, wobei die beiden Lichtvorhänge und entsprechend die Zeilensensoren rechtwinklig zueinander orientiert sind. Vorliegend ist einer der Lichtvorhänge ein vertikal orientierter Lichtvorhang und der andere Lichtvorhang ist ein horizontal orientierter Lichtvorhang (vgl. Fig. 7). Beim Drehen des Prüfkopfes um die Kontaktelemente 5, 6 werden die erfassten Schattenbilder aufgezeichnet. Mit 45 sind die Schattenkanten der so beleuchteten Kontaktelemente bezeichnet.

Das Verfahren zum rotationslagerichtigen Ausrichten von konfektionierten Kabelenden zweier Kabel des UTP-Kabels kann zum Beispiel wie folgt ablaufen: Das fertig bearbeitete UTP-Kabel wird in die Kabelausrichteinrichtung 10 eingebracht und an den unverdrillten Kabelenden werden die Kabel von den Kabeldrehmodulen 7, 17 erfasst. Zur Zugentlastung kann der verdrillte Bereich des Kabels in einem gewissen Abstand zur Kabelausrichteinrichtung 10 gehalten werden. Danach wird die optische Detektionseinrichtung 11 in eine Prüfposition gefahren. Dort dreht die optische Detektionseinrichtung 11 den Prüfkopf 40 um die Kontaktelemente 5, 6 und prüft die Rotationslage der Kontaktelemente. Der Prüfkopf 40 besitzt wenigstens den einen Lichtvorhang 41 und den zugehörigen Zeilensensor 42, um Schattenbilder der Kontaktelemente 5,6 zu erzeugen. Während dem sich der Prüfkopf 40 um die Kontaktelemente 5, 6 dreht, werden die erfassten Schattenbilder aufgezeichnet.

Wie aus Figur 7 erkennbar ist, umfasst die optische Detektionseinrichtung 11 einen ersten Lichtvorhang 41 und einen diesem gegenüberliegenden Zeilensensor 42. Dazwischen befinden sich die konfektionierten Kabelenden der beiden Kabel, wobei vorliegend die Kontaktelemente 5 und 6 vereinfacht als fast rechteckige Querschnittsflächen dargestellt sind. Im vorliegenden Ausführungsbeispiel haben die Kontaktelemente 5 und 6 eine rechteckige Aussenkontur. Die Rechtecke verlaufen ersichtlicherweise nicht senkrecht zum Lichtvorhang, was einer realen Situation nahe kommt, wo die Kabelenden leicht gekippt sein können. Die optische Detektionseinrichtung 11 ist um eine Drehachse, die sich in Richtung der x-Achse erstreckt, drehbar. Der Zeilensensor 42 nimmt nach jeder Drehung um einen kleinen Winkelbetrag der optische Detektionseinrichtung 11 ein Bild auf, wodurch das in Figur 7 gezeigte zusammengesetzte Schattenbild entsteht.

Die mit ω bezeichnete Achse des Schattenbildes entspricht dem Drehwinkel der optischen Detektionseinrichtung 11. Die optische Detektionseinrichtung 11 umfasst einen zweiten Lichtvorhang 43 und einen diesem gegenüberliegenden Zeilensensor 44. Daten der Anordnung mit zweitem Lichtvorhang 43 und zugehörigen Zeilensensor 44 können ebenfalls für die Ermittlung der Rotationslage der konfektionierten Kabelenden verwendet werden.

In an sich bekannter Weise wird die Schattenkontur nach lokalen Minima 46 untersucht, um die Rotationslage der Kontaktelemente 5, 6 zu ermitteln. Da es sich um zwei Kontaktelemente 5, 6 handelt, überschneiden sich die zwei Schattenkonturen 45, wenn sich der Prüfkopf 40 um die Kontaktelemente 5, 6 dreht. Im mit 47 bezeichneten Überlappungsbereich ist eine Winkelbereich-Prüfung schwierig; also jener Drehwinkelbereich des Prüfkopfes 40, in dem erwartet wird, dass die Kontaktelemente 5, 6 übereinander liegen (aus Sicht des Zeilensensors 42). Die Bereiche 55 und 56 zeigen den jeweiligen Prüfbereich der Sensoren, wenn der Prüfkopf nur eine Drehung zwischen den Winkelpositionen -40° und +40° macht. In Figur 7 findet der Zeilensensor 44 die Minima der Kontaktteile 5, 6 in seinem Messbereich 56. Der Zeilensensor 42 hingegen findet die Minima nicht, da sich die Kontakte in seinem Messbereich 55 gerade dort überschneiden.

Wenn die Kontaktelemente 5, 6 annähernd parallel zur Drehachse des Prüfkopfs 40 verlaufen und einen rechteckigen Querschnitt in der Schnittebene des Lichtvorhangs 41 aufweisen, dann sind die Minima 46 eines Kontaktteils 5, 6 um 90° voneinander versetzt. In dieser Idealsituation wiederholen sich die lokalen Minima nach 180°. Daher muss nicht zwingend der ganze Bereich von 360° nach den Minima abgesucht werden. Verlaufen die Kontaktelemente 5, 6 mit rechteckigem Querschnitt in einem kleinen Winkelbetrag (z.B. 5°) zur Drehachse des Prüfkopfes 40, so kann unter Umständen der erfasste Querschnitt ein wenig zu einem Parallelogramm verzerrt werden, wenn die Kippachse diagonal verläuft.

Solange die Minima 46 sich nicht zu stark von 90° wegbewegen, kann dieser Fall durch den Toleranzbereich der Kabelausrichteinrichtung 10 abgefangen werden.
Ist der Querschnitt des rechteckigen Kontaktelement stark zu einem Parallelogramm verzerrt, kann die aktuelle Rotationslage auch berechnet werden. Der nachfolgende Bestückungsprozess könnte unter Umständen durch eine abgebogene Kabelspitze erschwert werden und der vorausgegangene Bearbeitungsprozess weist demnach einen Fehler auf. Daher wird häufig eine Fehlermeldung bevorzugt.

Um die Prüfzeit zu verkürzen ist es auch vorstellbar, dass der Prüfkopf 40 einen (nicht dargestellten) zweiten Lichtvorhang 43 mit zugehörigem Zeilensensor 44 beinhaltet, wobei dieser zweite Lichtvorhang um 90° zum ersten Lichtvorhang 41 versetzt positioniert ist.

Figur 8a zeigt links eine Situation, bei der Kontaktelemente 5, 6 mit ihrer schmaleren Seite in horizontaler Richtung ausgerichtet werden sollen. Für diese Situation wird die Messung des mit 42 bezeichneten vertikalen Sensors ausgewertet. Hieraus ergibt sich das rechts in Figur 8a gezeigte Schattenbild. Der Überlappungsbereich 47 der zu erwartenden Überschneidung ist die Prüfung schwierig. Um diese Schwierigkeit zu überwinden, wird das Kontaktelement 5 durch Verschieben des entsprechenden Kabeldrehmoduls in die in Figur 8b gezeigte Position bewegt. Wenn wie vorliegend die Kontaktelemente die Kontur eines flachen Rechtecks besitzen, welche in der Horizontalen ausgerichtet werden sollen, so wird die Position des Kontaktteils 5 um beispielhaft 12 mm nach oben verschoben, um eine unvorteilhafte gegenseitige Abschattung der Kontaktteile 5 und 6 in der Drehlageprüfung zu vermeiden. Einer der vorgängig beschriebenen Drehgreifer des bewegbaren Drehmoduls lässt sich dazu durch einen Druckluftzylinder um 12 mm nach oben verschieben. Die Verschiebung ist so gewählt, dass sie einen grösstmöglichen Winkelmessbereich ohne Abschattung ermöglicht und noch innerhalb des Prüfbereichs der optischen Prüfeinheit liegt. Der Prüfbereich hat dabei vorliegend beispielhaft einen Durchmesser von ca. 25mm. Dank diesem Versatz präsentiert sich ein neues Schattenbild, welches nun im vorigen schwierigen Bereich 55 zur Prüfung geeignet ist. Durch die Verschiebung wird die Schattenkurve verzerrt, welche die Prüfeinheit der Detektionseinrichtung 11 abtastet. Die zuvor in einem Überlappungsbereich befindlichen Minima treten durch die Verzerrung aus diesem Bereich heraus und lassen sich erfassen.

Der oben erwähnte vorbestimmter feste Wert von 12 mm für den Verschiebeweg ist auf ein Beispiel gerichtet, das für gängige Kabelstränge mit verdrillten Kabeln, wie sie häufig für Kabelbäume für Automobile oder Flugzeuge eingesetzt werden, vorkommen kann. In einer Ausführungsform lässt sich das Mass der Verschiebung einstellen, resp. an die Situation anpassen, so dass die verzerrte Schattenkurve nicht den Bereich des zu erwartenden Minimums überlappt.

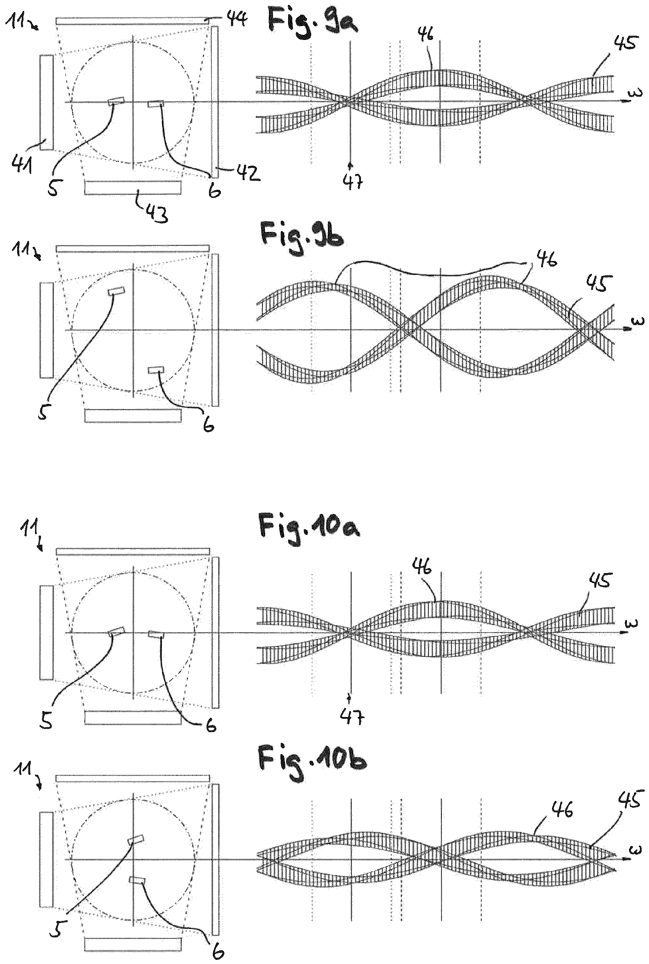

Die Figuren 9a, 9b und 10a, 10b zeigen weitere Varianten von Prüfsituationen, bei welchen das Erstellen eines Versatzes vorteilhaft ist. Die Figuren 9b und 10b sind dabei Situationen mit versetzten Kontaktelementen 5, 6 durch Verschieben der Kabeldrehmodule gerichtet.

Die Figuren 9a und 9b betreffen dabei eine Ausführungsvariante, bei der sich beide Drehmodule bzw. deren Drehgreifer in der Höhe in vertikaler Richtung verschieben lassen, wobei ein Drehgreifer nach oben und der andere Drehgreifer nach unten verschoben werden. Dadurch können beide Schattenkurven verzerrt werden, um die Chancen einer unvorteilhaften Überlappung weiter zu minimieren. Die zwei Kabelachsen sind in dieser Ausführung auf gleicher Z-Position (Fig. 8a), wie die Drehachse des Prüfkopfes. Der Versatz ist entsprechend angepasst (Fig. 9b).

Die Figuren 10a und 10b betreffen dabei eine Ausführungsvariante, bei der die Drehgreifer diagonal verschoben werden, so dass die Kabelachsen in z-Richtung übereinanderstehen. Als diagonale Richtung eine schräge Verschieberichtung verstanden, die wie im vorliegenden Ausführungsbeispiel um 45° zur Horizontalen geneigt ist. Die Kontakteile 5, 6 können so einfach aus der Ausgangsstellung, bei der die Kontakteile 5, 6 auf derselben horizontalen Ordinatenachse liegen (Fig. 10a), in die in Fig. 10b gezeigte Position verschoben werden, in welcher die Kontakteile 5, 6 auf derselben vertikalen Ordinatenachse liegen. So wird bei Kontakteilen 5, 6 mit horizontal flachem Querschnitt die Drehlage-Prüfung wesentlich verbessert, da die kleineren Minima kaum in einen Überlappungsbereich geraten können.

Nach Abschluss der rotationslagerichtigen Ausrichtung greift die zwei individuell ansteuerbare Bestückungskabelgreifer 30, 31 umfassende Bestückungsgreifeinheit 12 die Kabelenden an ihren jeweiligen z-Positionen und die optische Detektionseinrichtung 11 wird von der Prüfposition weggefahren. Vor oder während dem Wegfahren erfolgt die Abtastung der Kontaktelemente 5, 6, um in bekannter Weise die Positionen der Spitzen der Kontaktelemente zu ermitteln. Danach führen die Bestückungskabelgreifer 30, 31 die Kontaktelemente 5, 6 in die vorgesehenen Steckplätze oder Zellen am Steckergehäuse ein, wobei der Bestückungsvorgang an die Positionen der Spitzen angepasst wird.

In einer weiteren bevorzugten Ausgestaltung des Ausrichtprozesses können die Kontaktelemente vorausgerichtet der Kabelausrichteinrichtung 10 zugeführt werden. Dank dieser Massnahme kann der Winkelbereich, um den die Kabelausrichteinrichtung 10 die Kontaktelemente 5, 6 drehen können muss, auf ±20° verkleinert werden. Ebenfalls lässt sich der Untersuchungsbereich des Prüfkopfes 40 verkleinern, da bei vorausgerichteten Kontaktelementen 5, 6 ein lokales Minimum 46 pro Kontaktelement ausreicht, um die Rotationslage zu bestimmen. Derart vorausgerichtet lassen sich insbesondere auch Kontaktelemente 5, 6 mit asymmetrischem Querschnitt gut verarbeiten.

## Patentansprüche

1. Kabelausrichteinrichtung (10) zum rotationslagerichtigen Ausrichten von konfektionierten Kabelenden zweier Kabel (3, 4) eines insbesondere verdrillten Kabelstrangs (2), die Kabelausrichteinrichtung (10) mit zwei Kabeldrehmodulen (7, 17) zum Drehen jeweils eines konfektionierten Kabelendes (3, 4) um seine Längsachse (L₁, L₂), wobei jedes Kabeldrehmodul (7, 17) über einen Drehkabelgreifer (8, 18) und eine Dreheinrichtung (9, 19) zum Drehen des Drehkabelgreifers (8, 18) verfügt, wobei wenigstens eines der Kabeldrehmodule (7, 17) mittels eines Antriebs (14) verschiebbar auf einem Einrichtungsgestell (13) zum Tragen der Kabeldrehmodule (7, 17) angeordnet ist.

2. Kabelausrichteinrichtung (10) nach Anspruch 1, **dadurch gekennzeichnet, dass** wenigstens eines der Kabeldrehmodule (7, 17) in vertikaler Richtung verschiebbar ist.

3. Kabelausrichteinrichtung (10) nach Anspruch 1 oder 2, **dadurch gekennzeichnet, dass** eine Kabeldrehmodul (7) verschiebbar auf dem Einrichtungsgestell (13) angeordnet ist und dass das andere Kabeldrehmodul (17) ortsfest auf dem Einrichtungsgestell (13) angeordnet ist.

4. Kabelausrichteinrichtung (10) nach einem der Ansprüche 1 bis 3, **dadurch gekennzeichnet, dass** die Kabeldrehmodule (7, 17) in Bezug auf eine Längsrichtung (x) hintereinander angeordnet sind.

5. Kabelausrichteinrichtung (10) nach einem der Ansprüche 1 bis 4, **dadurch gekennzeichnet, dass** im Einrichtungsgestell (13) ein Pneumatikzylinder (14) als Antrieb zum Verschieben des Kabeldrehmoduls (7) integriert ist.

6. Kabelausrichteinrichtung (10) nach einem der Ansprüche 1 bis 5, **dadurch gekennzeichnet, dass** die Dreheinrichtungen (9, 19) zum Drehen der Drehkabelgreifer (8, 18) Antriebe (20, 21) umfassen, die getriebemässig über Ritzel (16, 26) und Zahnkranzsegmente (15, 25) mit den Drehkabelgreifern (8, 18) verbunden sind.

7. Kabelausrichteinrichtung (10) nach Anspruch 6, **dadurch gekennzeichnet, dass** der jeweilige Drehkabelgreifer (8, 18) an einem Zahnkranzsegment (15, 25) angebracht ist, welcher einen beschränkten Drehbereich von maximal 90° und vorzugsweise zwischen 30° und 45° definiert.

8. Verfahren zum rotationslagerichtigen Ausrichten von konfektionierten Kabelenden zweier Kabel (3, 4) eines insbesondere verdrillten Kabelstrangs (2), vorzugsweise unter Verwendung der Kabelausrichteinrichtung (10) nach einem der Ansprüche 1 bis 9, **gekennzeichnet dadurch, dass** die Rotationslage der konfektionierten Kabelenden (3, 4) der Kabel mittels der Kabelausrichteinrichtung (10) verändert und so das jeweilige konfektionierten Kabelende (3, 4) ausgerichtet wird, wobei die Kabelenden (3, 4) zum Erstellen eines Versatzes zu Beginn auf unterschiedliche Höhen mittels der Kabelausrichteinrichtung (10) gebracht werden.

9. Verfahren nach Anspruch 8, **dadurch gekennzeichnet, dass** zum Erstellen des Versatzes zu Beginn des Ausrichtvorgangs die Kabelenden (3, 4) um einen vorbestimmten oder variablen Verschiebeweg relativ zueinander bewegt werden.

10. Verfahren nach Anspruch 9, **dadurch gekennzeichnet, dass** die Kabelenden (3, 4) soweit in einer diagonalen Richtung voneinander weg oder aufeinander zu bewegt werden, bis die Kabelachsen (L₁, L₂) der Kabelenden in vertikaler Richtung (z) übereinander stehen.

11. Verfahren nach Anspruch 9 oder 10, **dadurch gekennzeichnet, dass** zu Beginn des Ausrichtvorgangs die Rotationslage der konfektionierten Kabelenden (3, 4) mittels einer optischen Detektionseinrichtung (11) ermittelt wird, wobei die optischen Detektionseinrichtung (11) ein Schattenbild der beiden Kontaktelemente (5, 6) der Kabelenden (3, 4) zur Lageerfassung verwendet.

12. Verfahren nach Anspruch 11, **dadurch gekennzeichnet, dass** zum Ermitteln der Rotationslage der konfektionierten Kabelenden (3, 4) eine optische Detektionseinrichtung (11) mit zwei Lichtvorhängen (41, 43) mit zugehörigem Zeilensensoren (42, 44) beinhaltet, wobei die beiden Lichtvorhänge rechtwinklig zueinander orientiert sind.

13. Verfahren nach einem der Ansprüche 11 bis 14, **dadurch gekennzeichnet, dass** zum Drehen der konfektionierten Kabelenden (3, 4) Drehkabelgreifer (8, 18) verwendet werden, die jeweils an Zahnkranzsegmenten (15, 25) angebracht sind, welcher beschränkte Drehbereiche definieren und dass, wenn die aktuelle Rotationslage eines oder beider der konfektionierten Kabelenden (3, 4) einen Winkelbereich übersteigt, der oder die jeweiligen Drehkabelgreifer (8, 18) vor oder zu Beginn des Ausrichtvorgangs in eine Ausgangslage gebracht werden, die von der durch das Zahnkranzsegment (15, 25) vorgegebenen Neutralstellung entfernt ist.

14. Verfahren nach einem der Ansprüche 8 bis 13, **dadurch gekennzeichnet, dass** die fertig ausgerichteten konfektionierten Kabelenden (3, 4) einer Rotationslage-Endprüfung unterzogen werden, während die Kabelenden noch von Drehkabelgreifern (8, 18) der Kabelausrichteinrichtung (10) gehalten werden oder nachdem sie von der Bestückungsgreifeinheit (12) ergriffen worden sind.
